# EUROPEAN PATENT SPECIFICATION

(11) **EP 3 409 096 B1**
(45) Date of publication and mention of the grant of the patent: **29.01.2020**
(21) Application number: 18175596.8
(22) Date of filing: 01.06.2018
(51) Int. Cl.: A01D 43/063

(54) **GRASS MOWER**
RASENMÄHER
TONDEUSE À GAZON

(30) Priority: 01.06.2017 JP 2017109378
(43) Date of publication of application: 05.12.2018
(73) Proprietor: Kubota Corporation, Osaka-shi, Osaka 556-8601 (JP)
(72) Inventor: AKITA, Masayuki, SAKAI-SHI, OSAKA, 5900823 (JP); KANAI, Toshiki, SAKAI-SHI, OSAKA, 5900823 (JP); YAMASHITA, Nobuyuki, SAKAI-SHI, OSAKA, 5900823 (JP); SHIBATA, Takashi, SAKAI-SHI, OSAKA, 5900823 (JP); NAGAISHI, Shoichiro, SAKAI-SHI, OSAKA, 5900823 (JP); AKAI, Yuto, SAKAI-SHI, OSAKA, 5900823 (JP); KAGO, Tatsuki, SAKAI-SHI, OSAKA, 5900823 (JP); MIHARA, Akihito, SAKAI-SHI, OSAKA, 5900823 (JP)
(74) Representative: Cabinet Beau de Loménie

(56) References cited:
- EP-A1- 3 050 424
- FR-A1- 2 862 480
- JP-A- 2007 074 955

## Description

### BACKGROUND OF THE INVENTION

### FIELD OF THE INVENTION

The present invention relates to a grass mower including a mower unit that is coupled to a vehicle frame via parallel links so as to be raiseable and lowerable, a grass collection duct that guides cut grass from the mower unit toward the rear of a vehicle body, and a grass collection container that stores the cut grass guided by the grass collection duct.

### DESCRIPTION OF THE RELATED ART

Examples of the above-described grass mower include a grass mower in which a bottom plate that constitutes a bottom surface of a cut grass discharge port is provided below the rear side of a deck of the mower so as to be able to swing up and down about a fulcrum and such that a manual swinging operation can be performed using an operation lever, as disclosed in JP 2007-74955A, for example. A gap through which cut grass clogging the vicinity of the connection portion of the cut grass discharge port and the duct can be discharged is formed between the bottom plate and the bottom plate of the duct. Another, similar grass mower was disclosed in EP 3050424.

In the above-described configuration, a gap is formed between the bottom plate of the cut grass discharge port and the bottom plate of the duct, whereby when the mower is raised rearward and upward, the bottom plate of the cut grass discharge port is prevented from coming into contact with the bottom plate of the duct.

However, in the above-described configuration, when the cut grass in the mower flows from the cut grass discharge port to the duct, an inconvenience has occurred in which the cut grass overflows from between the bottom plate of the cut grass discharge port and the bottom plate of the duct.

That is, it is desirable to suppress the occurrence of the inconvenience in which the cut grass that is guided to the grass collection container overflows from between the bottom plates that are aligned in the front-rear direction in the grass collection duct.

### SUMMARY OF THE INVENTION

A grass mower according to the present invention, comprising:
an engine;
a mower unit that is coupled to a vehicle body frame via parallel links so as to be raiseable and lowerable;
a grass collection duct configured to guide cut grass from the mower unit toward the rear of the vehicle body; and
a grass collection container configured to store the cut grass guided by the grass collection duct,
the grass collection duct includes: a first bottom plate attached to the mower unit side; a second bottom plate attached to the vehicle body frame side so as to be able to swing up and down; and a connection mechanism that causes the second bottom plate to swing up and down in conjunction with raising and lowering of the mower unit, and
in a state in which the mower unit is in contact with the ground, the connection mechanism connects the mower unit and the second bottom plate such that the front end portion of the second bottom plate is near to the rear end portion of the first bottom plate, and as the mower unit rises rearward and upward, the second bottom plate swings in a forward-rising direction and the rear end portion of the first bottom plate goes below the second bottom plate while the state of being near to the second bottom plate is maintained.

According to this means, in the cutting task performed with the mower unit in contact with the ground, the front end portion of the second bottom plate is near to the rear end portion of the first bottom plate, whereby the gap formed between the rear end portion of the first bottom plate and the front end portion of the second bottom plate becomes narrower. Accordingly, the cut grass guided by the grass collection duct is less likely to leak out from the gap between the rear end portion of the first bottom plate and the front end portion of the second bottom plate in the grass collection duct.

Also, when the mower unit is raised rearward and upward, the rear end portion of the first bottom plate goes below the second bottom plate while the state of being near to the second bottom portion is maintained, and thus it is possible to prevent the first bottom plate from coming into contact with the second bottom plate. Also, regardless of whether a low cutting task in which the ground work height of the mower unit is low or a high cutting task in which the ground work height of the mower unit is high is performed, the gap formed between the rear end portion of the first lower plate and the front end portion of the second lower plate is made narrower. Because of this, the cut grass guided by the grass collection duct is less likely to leak from the gap between the rear end portion of the first bottom plate and the front end portion of the second bottom plate of the grass collection duct.

As a result, the raising and lowering operation of the mower unit can be performed smoothly without incurring an inconvenience in which the first bottom plate comes into contact with the second bottom plate, and regardless of the cutting height adjustment for changing the ground work height of the mower unit, it is possible to effectively suppress the occurrence of an inconvenience in which the cut grass guided by the grass collection duct overflows to the work ground from the gap between the rear end portion of the first bottom plate and the front end portion of the second bottom plate.

The grass collection duct includes a first duct upper body that is attached to the mower unit, and a second duct upper body that is attached to the vehicle body frame,
the front end portion of the second duct upper body is formed widely so as to cover the rear end portion of the first duct upper body from above, and
the front end portion of the second bottom plate is formed in a tapered shape such that the front end portion of the second bottom plate falls within the left-right width of the first duct upper body.

According to this means, the front end portion of the second duct upper body located downstream in the cut grass conveying direction covers, from above, the rear end portion of the first duct upper body located upstream in the cut grass conveying direction, and thus it is possible to prevent the occurrence of an inconvenience in which the cut grass from the mower unit leaks out from the gap between the rear end portion of the first duct upper body and the front end portion of the second duct upper body.

Also, if the first duct upper body shakes in the left-right direction due to twisting of the mower unit or the like during the cutting task, the front end portion of the second bottom plate maintains the guiding function due to being located within the left-right width of the first duct upper body, while allowing the shaking in the left-right direction of the first duct upper body. As a result, the cut grass from the mower unit can be guided favorably toward the grass collection container rearward of the vehicle body, regardless of the twisting of the mower unit or the like that occurs during the cutting task.

In another embodiment, the connection mechanism includes a push/pull rod configured to convert a rising and lowering movement of the mower unit into a swinging movement of the second bottom plate, and
the push/pull rod includes an adjustment portion for adjusting a length of the push/pull rod.

According to this means, by adjusting the length of the push/pull rod using the adjustment portion, it is possible to change the swinging orientation of the second bottom plate, which changes according to the height position of the first bottom plate. Accordingly, the size of the gap formed between the rear end portion of the first bottom plate and the front end portion of the second bottom plate can be easily adjusted.

As a result, it is possible to more effectively suppress the occurrence of an inconvenience in which the cut grass overflows from the gap between the rear end portion of the first bottom plate and the front end portion of the second bottom plate.

In another embodiment, the connection mechanism includes a swinging arm configured to push up the front end side of the second bottom plate from below in conjunction with the raising of the mower unit,
the front end side of the second bottom plate is allowed to independently swing away from the swinging arm, and
the grass collection duct includes a manual operation mechanism that enables an independent swinging operation of the second bottom plate.

According to this means, during the cutting task, if the cut grass sticks to and accumulates on the second bottom plate in the grass collection duct, resulting in clogging, the driver can independently swing the second bottom plate in the up-down direction using a manual operation mechanism, and thus can remove the grass that has stuck to and accumulated on the second bottom plate.

As a result, clogging in the grass collection duct, which is caused by the cut grass attaching to and accumulating on the second bottom plate, can be easily resolved.

In another embodiment, the first bottom plate is attached to the mower unit side so as to be able to swing up and down, and
the grass collection duct includes a biasing member for biasing the first bottom plate to return to a rearward-raised guiding orientation, and a manual operation mechanism that enables an independent swinging operation of the first bottom plate against the action of the biasing member.

According to this means, the first bottom plate can guide the cut grass from the mower unit to the second bottom plate during the cutting task, due to the fact that the first bottom plate is usually held in the rearward-raised guiding orientation by the biasing member.

Also, if clogging, in which the cut grass sticks to and accumulates on the first bottom plate in the grass collection duct, occurs during the cutting task, the driver can remove the cut grass that has stuck to and accumulated on the first bottom plate by independently swinging the first bottom plate in the up-down direction using the manual operation mechanism.

As a result, it is possible to easily resolve clogging in the grass collection duct caused by the cut grass sticking to and accumulating on the first bottom plate without causing the guiding function of the first bottom plate to deteriorate.

In another embodiment, the first bottom plate includes a guiding surface that tilts upward to the rear with respect to the upper surface of the first bottom plate, and an auxiliary guiding portion that guides the cut grass above the second bottom plate that has swung in a forward-rising direction.

According to this means, in the case of performing a high cutting task in which the ground work height of the mower unit is high, it is possible to suppress the occurrence of an inconvenience in which the cut grass guided by the first bottom plate flows under the second bottom plate that has swung in the forward-rising direction, in conjunction with the ground work height of the mower unit being made higher.

### BRIEF DESCRIPTION OF THE DRAWINGS

FIG. 1 is a left-side view of a grass mower.
FIG. 2 is a plan view of the grass mower.
FIG. 3 is a plan view of a mower unit and the like.
FIG. 4 is a left-side view of main portions, showing a positional relationship between a first bottom plate and a second bottom plate of a grass collection duct in a state in which the mower unit is in contact with the ground.
FIG. 5 is a left-side view of main portions, showing a positional relationship between the first bottom plate and the second bottom plate of the grass collection duct at an upper limit position of the mower unit.
FIG. 6 is a cross-sectional left-side view of main portions, showing a positional relationship between the first bottom plate and the second bottom plate of the grass collection duct in a state in which the mower unit is in contact with the ground.
FIG. 7 is a cross-sectional left-side view of main portions, showing a positional relationship between the first bottom plate and the second bottom plate of the grass collection duct at an upper limit position of the mower unit.
FIG. 8 is a horizontal cross-sectional plan view of main portions, showing a positional relationship between the first bottom plate and the second bottom plate of the grass collection duct, and the like.
FIG. 9 is a partial exploded view of main portions, showing the shapes of the first bottom plate and the second bottom plate, a configuration of a connection mechanism, and the like.
FIG. 10 is a left-side view of main portions, showing a state in which the mower unit is removed and a push/pull rod of the connection mechanism is held by a holder.

### DETAILED DESCRIPTION OF PREFERRED EMBODIMENTS

Hereinafter, an example of a mode for carrying out the present invention will be described with reference to the drawings.

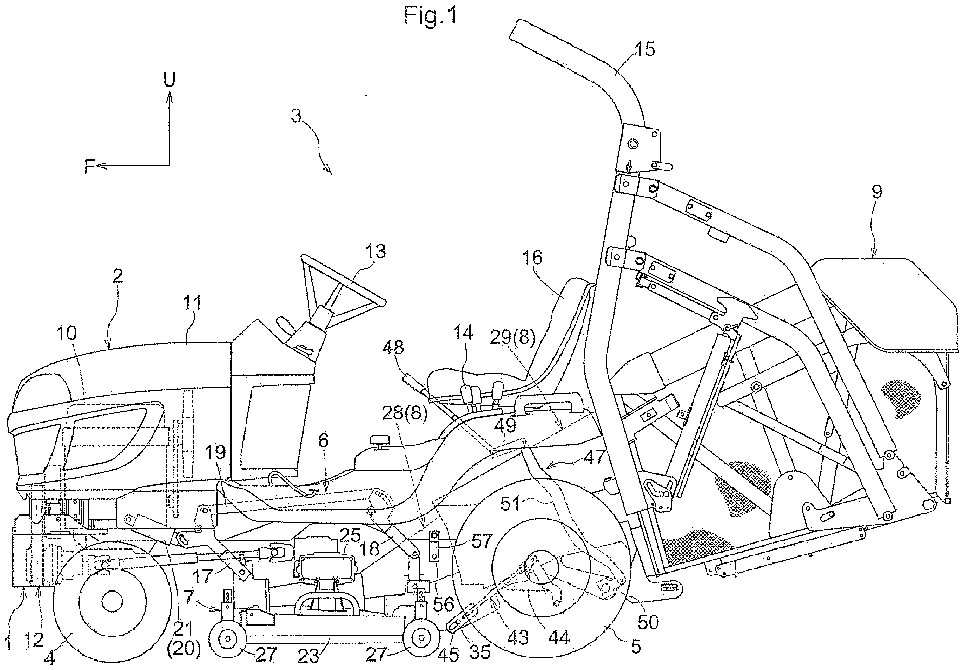

Note that the direction indicated by the arrow of reference sign F shown in FIG. 1 is the front side of a grass mower, and the direction indicated by the arrow with reference sign U is the upper side of the grass mower.

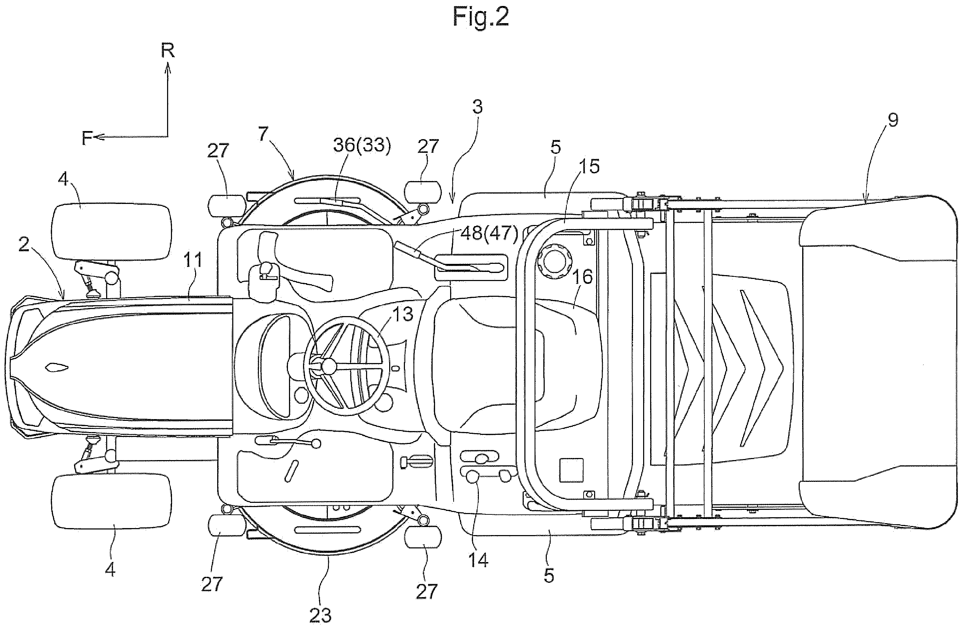

Also, the direction indicated by the arrow with reference sign F shown in FIG. 2 is the front side of the grass mower, and the direction indicated by the arrow with reference sign R is the right side of the grass mower.

As shown in FIGS. 1 and 2, the grass mower illustrated in the present embodiment includes a vehicle body frame 1, a motor portion 2, a riding-type driving portion 3, steerable left and right front wheels 4, left and right rear wheels 5, a mower unit 7, a grass collection duct 8, a grass collection container 9, and the like. The vehicle body frame 1 forms a framework of the vehicle body. The motor portion 2 is disposed on the front portion side of the vehicle body frame 1. The driving portion 3 is formed on the rear portion side of the vehicle body frame 1. The left and right rear wheels 5 are driven by the driving force from the motor portion 2. The mower unit 7 is coupled to the front-rear central portion of the vehicle body frame 1 via parallel links 6 so as to be raiseable and lowerable. The grass collection duct 8 guides the cut grass from the mower unit 7 toward the rear of the vehicle body. The grass collection container 9 stores the cut grass guided by the grass collection duct 8. Accordingly, this grass mower is of a mid-mount type in which the mower unit 7 is included at the belly between the left and right front wheels 4 and the left and right rear wheels 5, and is a grass collection type in which the grass collection container 9 is included on the rear end portion of the vehicle body.

The motor portion 2 includes an engine 10 that is supported by the vehicle body frame 1 so as to prevent vibration, a hood 11 that covers the engine 10, and the like. The power from the engine 10 is transmitted to the left and right rear wheels 5 via a travel transmission system (not shown) and is transmitted to the mower unit 7 via a work transmission system 12.

The driving portion 3 includes a steering wheel 13 for front-wheel steering, a raising/lowering lever 14 that swings forward and rearward, a protection frame 15, a driver's seat 16, and the like. The raising/lowering lever 14 enables a raising or lowering operation of the mower unit 7. The protection frame 15 extends upward from the rear end portion of the vehicle body frame 1. The driver's seat 16 is disposed in the protection region of the protection frame 15.

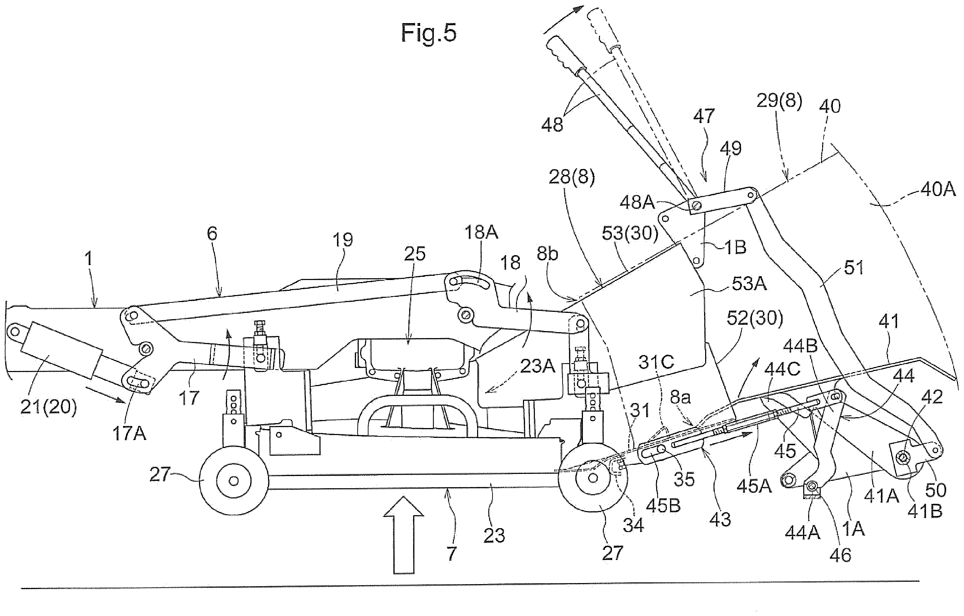

As shown in FIGS. 1, 4, 5, and 10, the parallel links 6 include left and right front swinging arms 17, left and right rear swinging arms 18, left and right connection links 19, and the like. The left and right front swinging arms 17 are supported by the front portion side of the vehicle body frame 1 so as to be able to swing forward and rearward. The left and right rear swinging arms 18 are supported by the rear portion side of the vehicle body frame 1 so as to be able to swing forward and rearward. The left and right connection links 19 interlinkingly couple the front swinging arms 17 and the rear swinging arms 18. The parallel links 6 are connected to the raising/lowering lever 14 via a hydraulic drive mechanism 20 for raising and lowering the mower unit. The hydraulic drive mechanism 20 includes a hydraulic cylinder 21 that drives the left-side front swinging arm 17 so as to be able to swing in the up-down direction, a valve unit (not shown) that controls the flow of oil to the hydraulic cylinder 21 according to the operation position of the raising/lowering lever 14, and the like.

According to the above-described configuration, due to the operation of the hydraulic drive mechanism 20 based on the operation of the raising/lowering lever 14, the parallel links 6 can raise and lower the mower unit 7 between a ground-contact height position at which the mower unit 7 is in contact with the ground, and an upper limit position that is rearward and above the ground-contact height position. Also, through this raising and lowering, the height of the grass cutting performed by the mower unit 7 can be adjusted.

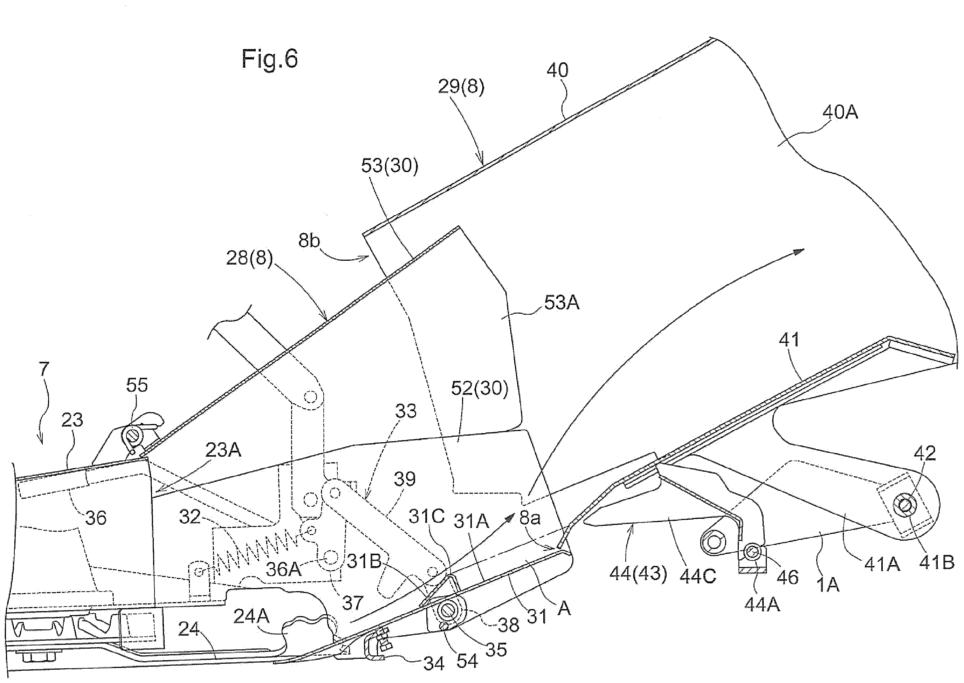

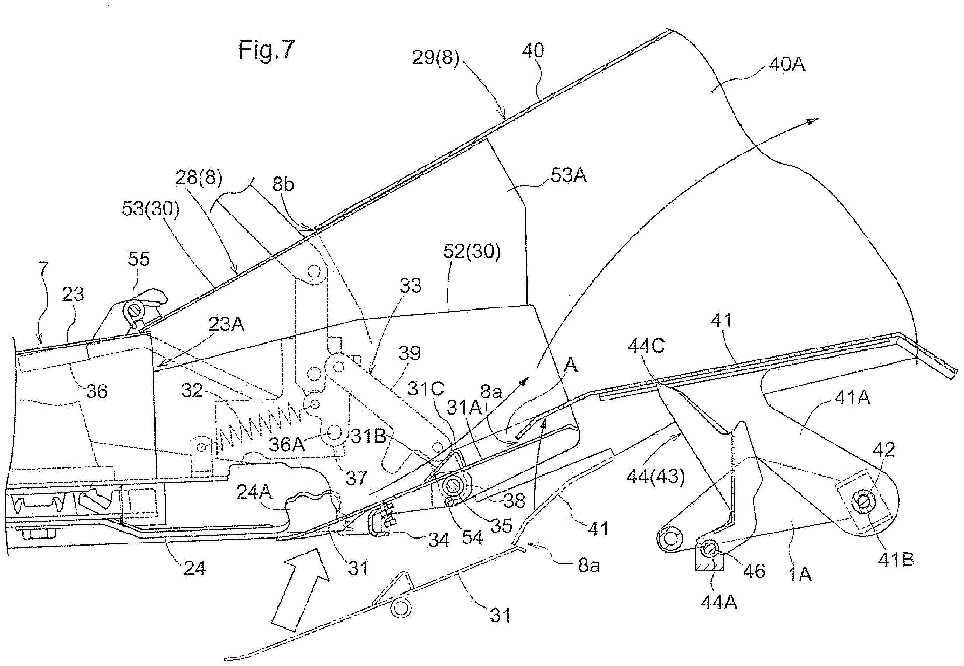

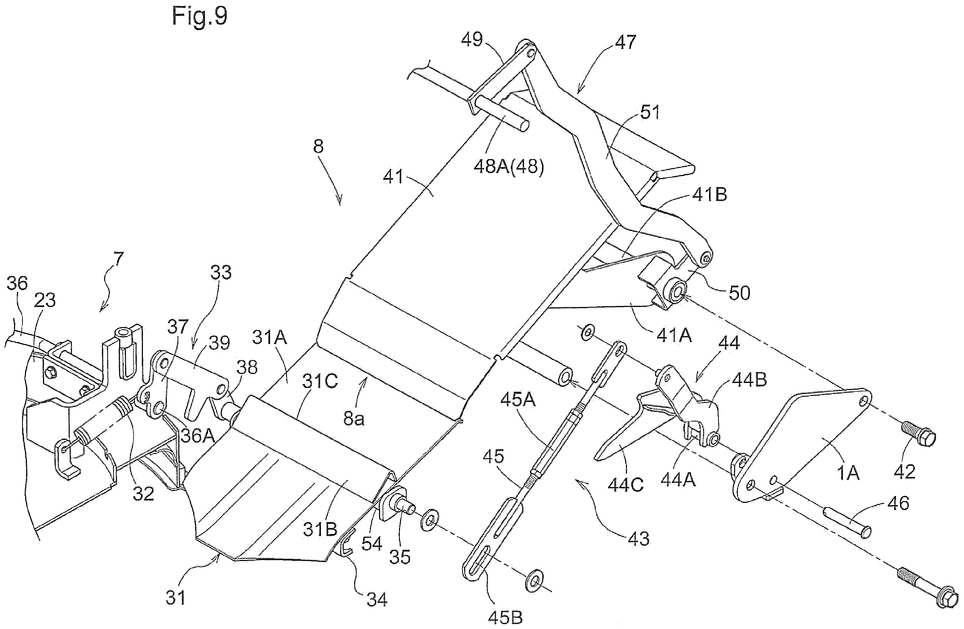

As shown in FIGS. 1 to 9, the mower unit 7 includes a mower deck 23, left and right bar blades 24, a gear-type transmission mechanism 25, a ride-over roller 26, left and right gauge wheels 27, and the like. The mower deck 23 is supported by hanging from the parallel links 6. The left and right bar blades 24 are supported by the mower deck 23 so as to be able to rotate about a vertical axis. The gear-type transmission mechanism 25 transmits the power from the engine 10 via the work transmission system 12 to the left and right bar blades 24. The ride-over roller 26 is disposed at a left-right central location on the front end portion of the mower deck 23. The left and right gauge wheels 27 are disposed on both the front and rear end portions of the mower deck 23 such that the height can be adjusted.

A discharge port 23A for cut grass discharge is formed at the left-right central portion on the rear portion of the mower deck 23. The rotation directions of the left and right bar blades 24 are set such that due to the power via the gear-type transmission mechanism 25, the right bar blade 24 rotates clockwise in plain view and the left bar blade 24 rotates counterclockwise in plain view. Wind generating blades 24A that generate transport wind accompanying the rotation of the bar blades 24 are formed on both end portions of the bar blades 24.

According to the above-described configuration, the left and right bar blades 24 are driven so as to rotate, whereby the mower unit 7 creates the transport wind using the wind generating blades 24A while cutting the grass of the cutting target region using the left and right bar blades 24. Also, the mower unit 7 transports the cut grass to the discharge port 23A of the mower deck 23, and thereafter transports the cut grass from the discharge port 23A through the interior of the grass collection duct 8, to the grass collection container 9.

As shown in FIGS. 1 and 3 to 9, the grass collection duct 8 includes a first duct 28 that is attached to the mower unit 7, and a second duct 29 that is attached to the vehicle body frame 1, and the grass collection duct 8 is formed into a structure that is divided into a front half and a rear half, and allows the raising and lowering of the mower unit 7 and the like.

As shown in FIGS. 2 to 9, the first duct 28 includes a first duct upper body 30, a first bottom plate 31, a tension spring 32 (an example of a biasing member), a first manual operation mechanism 33, and the like. The first duct upper body 30 is attached to the mower deck 23. The first bottom plate 31 is attached to the first duct upper body 30 so as to be able to swing up and down. The tension spring 32 biases the first bottom plate 31 so as to return to a rearward-raised guiding orientation. The first manual operation mechanism 33 enables an independent swinging operation of the first bottom plate 31 against the action of the tension spring 32.

According to this configuration, the first bottom plate 31 can guide the cut grass from the mower unit 7 to the second duct 29 during the cutting task due to the fact that the first bottom plate 31 is usually held in a rearward-raised guiding orientation by the tension spring 32.

Also, during the cutting task, if clogging in which the cut grass sticks to and accumulates on the first bottom plate 31 in the first duct 28 occurs, the driver can independently swing the first bottom plate 31 in the up-down direction using the first manual operation mechanism 33, and thus can remove the cut grass that has stuck to and accumulated on the first bottom plate 31.

As a result, it is possible to easily resolve clogging in the first duct 28 caused by the cut grass sticking to and accumulating on the first bottom plate 31, without causing the guiding function of the first bottom plate 31 to deteriorate.

As shown in FIGS. 1 and 3 to 9, a support member 34 that receives and supports the front end portion of the first bottom plate 31 from below is included at a central location in the left-right direction of the rear end portion of the mower deck 23. The first bottom plate 31 is fixed to a left-right oriented swinging fulcrum axis 35 that is supported by the first duct upper body 30 so as to be able to rotate. The first bottom plate 31 is held in a rearward-raised guiding orientation due to the front end portion thereof being pressed into the support member 34 due to the action of the tension spring 32.

As shown in FIGS. 2, 3, and 6 to 9, the first manual operation mechanism 33 includes an approximately L-shaped first operation lever 36, a first arm 37, a second arm 38, a push/pull link 39, and the like. The first operation lever 36 includes a left-right oriented spindle portion 36A and is supported by the right-side rear portion of the mower deck 23 so as to be able to swing up and down. The first arm 37 is fixed to the left end part of the spindle portion 36A. The second arm 38 is fixed to the right end portion of the swinging fulcrum axis 35. The push/pull link 39 connects the first arm 37 and the second arm 38. The first arm 37 is biased so as to swing in the forward oblique direction due to the action of the above-described tension spring 32, whereby the first manual operation mechanism 33 holds the first bottom plate 31 in the rearward-raised guiding orientation. The first operation lever 36 is operated so as to be swung by being pulled rearward and upward, whereby the first manual operation mechanism 33 swings the first bottom plate 31 in the rearward and downward direction from the rearward-raised guiding orientation, against the action of the tension spring 32.

According to the above-described configuration, if clogging in which the cut grass sticks to and accumulates on the first bottom plate 31 occurs in the first duct 28 during the cutting task, the operator can, while seated in the driver's seat 16, independently swing the first bottom plate 31 by swinging the first operation lever 36 in the up-down direction, and thus it is possible to remove the cut grass that has stuck to and accumulated on the first bottom plate 31.

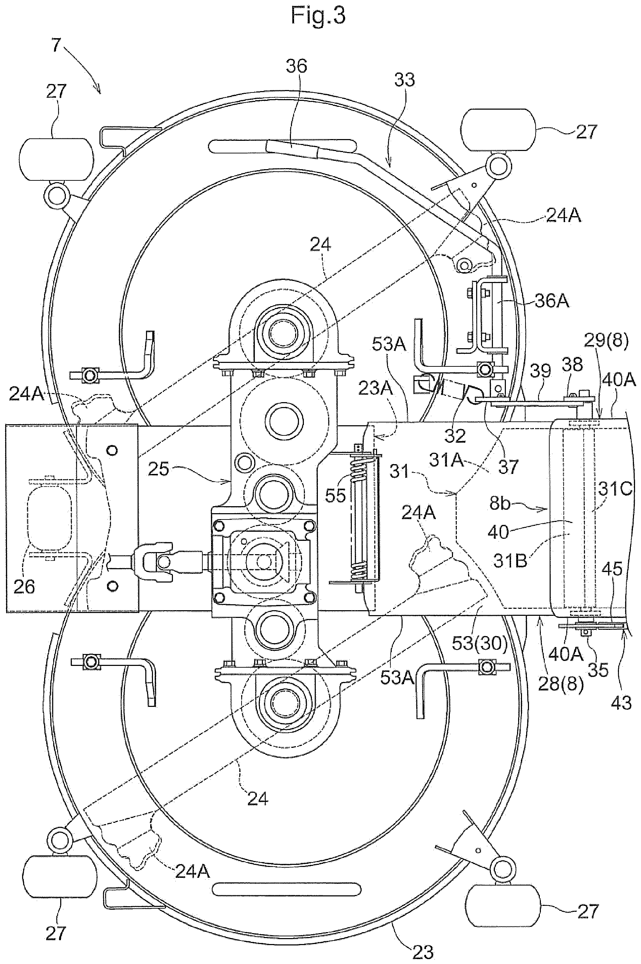

As shown in FIGS. 3 to 10, the second duct 29 includes a second duct upper body 40 that is fixed to the vehicle body frame 1, a second bottom plate 41 that is attached to the vehicle body frame 1 so as to be able to swing up and down, and the like. The second bottom plate 41 includes left and right arm portions 41A that extend rearward and downward from the bottom surface, and a cylinder shaft portion 41B that couples the extended end portions of the left and right arm portions 41A. Also, the cylinder shaft portion 41B is supported by the left and right first support plates 1A of the vehicle body frame 1 so as to be able to rotate via the left and right bolts 42 that function as left-right oriented spindles. That is, the second bottom plate 41 swings up and down using the cylinder shaft portion 41B as a swinging fulcrum.

As shown in FIGS. 1 and 3 to 10, the grass collection duct 8 includes a connection mechanism 43 that allows the second bottom plate 41 to swing up and down in conjunction with the raising and lowering of the mower unit 7. In a state in which the mower unit 7 is in contact with the ground, the front end portion of the second bottom plate 41 is near to the rear end portion of the first bottom plate 31. Also, the second bottom plate 41 swings in the forward-rising direction as the mower unit 7 rises rearward and upward, and thus the rear end portion of the first bottom plate 31 goes below the second bottom plate 41 while the state of being near to the second bottom plate is maintained. In this manner, the connection mechanism 43 links the mower unit 7 and the second bottom plate 41.

According to this configuration, in the cutting task performed with the mower unit 7 in contact with the ground, the front end portion of the second bottom plate 41 is near to the rear end portion of the first bottom plate 31, whereby the gap 8a that is formed between the rear end portion of the first bottom plate 31 and the front end portion of the second bottom plate 41 becomes narrower. Accordingly, the cut grass guided by the grass collection duct 8 is less likely to leak out from the gap 8a between the rear end portion of the first bottom plate 31 and the front end portion of the second bottom plate 41 of the grass collection duct 8.

Also, when the mower unit 7 is raised rearward and upward, the rear end portion of the first bottom plate 31 goes below the second bottom plate 41 while the state of being near to the second bottom plate 41 is maintained, and thereby the first bottom plate 31 can be prevented from coming into contact with the second bottom plate 41. Also, regardless of whether the low cutting task in which the ground work height of the mower unit 7 is low or the high cutting task in which the ground work height of the mower unit 7 is high is performed, the gap 8a formed between the rear end portion of the first bottom plate 31 and the front end portion of the second bottom plate 41 is made narrower. Due to this, the cut grass guided by the grass collection duct 8 is less likely to leak out from the gap 8a between the rear end portion of the first bottom plate 31 and the front end portion of the second bottom plate 41 of the grass collection duct 8.

As a result, the raising and lowering operation of the mower unit 7 can be performed smoothly without incurring an inconvenience in which the first bottom plate 31 comes into contact with the second bottom plate 41, and it is possible to effectively suppress the occurrence of an inconvenience in which the cut grass guided by the grass collection duct 8 overflows to the work ground from the gap 8a between the rear end portion of the first bottom plate 31 and the front end portion of the second bottom plate 41, regardless of the cutting height adjustment for changing the ground work height of the mower unit 7.

Incidentally, the grass mower can adjust the height of the cutting performed by the mower unit 7 through a raising or lowering operation of the mower unit 7 or through a height adjustment of the gauge wheels 27 with respect to the mower deck 23.

As shown in FIGS. 1 and 3 to 10, the connection mechanism 43 includes a swinging arm 44 and the push/pull rod 45. The swinging arm 44 is supported by the first support plate 1A on the left side of the vehicle body frame 1 so as to be able to swing forward and rearward. The push/pull rod 45 connects the mower unit 7 and the swinging arm 44. The swinging arm 44 includes a cylinder shaft portion 44A, a first arm portion 44B, a second arm portion 44C, and the like. The cylinder shaft portion 44A is supported by the left-side first support plate 1A so as to be able to rotate via the left-right oriented spindle 46. The second arm portion 44C extends forward and upward from the first arm portion 44B that extends forward and upward from the left end portion of the cylinder shaft portion 44A, and from the right end portion of the cylinder shaft portion 44A. The extended portion of the first arm portion 44B is coupled by pin to the rear end portion of the push/pull rod 45. The front portion side of the second bottom plate 41 is received and supported from below by the upper edge portion on the extended end side of the second arm portion 44C. The front end portion of the push/pull rod 45 is linked to the mower unit 7 via the above-described swinging fulcrum axis 35.

That is, with the connection mechanism 43, the second arm portion 44C of the swinging arm 44 is configured to press up the front portion side of the second bottom plate 41 from below in conjunction with the raising of the mower unit 7. Also, the push/pull rod 45 is configured to convert the raising and lowering movement of the mower unit 7 into the swinging movement of the second bottom plate 41 via the swinging arm 44.

As shown in FIGS. 1, 4, 5, and 8 to 10, the push/pull rod 45 includes a turn buckle-type adjustment portion 45A that adjusts the length of the push/pull rod 45. Accordingly, with this connection mechanism 43, the length of the push/pull rod 45 is adjusted by the adjustment portion 45A, whereby the swinging orientation of the second bottom plate 41 that changes according to the height position of the first bottom plate 31 can be changed and the size of the gap 8a formed between the rear end portion of the first bottom plate 31 and the front end portion of the second bottom plate 41 can be easily adjusted. As a result, it is possible to more effectively suppress the occurrence of an inconvenience in which the cut grass overflows from the gap 8a between the rear end portion of the first bottom plate 31 and the front end portion of the second bottom plate 41.

Note that in the state in which the mower unit 7 is in contact with the ground, the second bottom plate 41 is received and held in a rearward-raised guiding orientation by the connection mechanism 43.

As shown in FIGS. 1, 2, and 4 to 10, the front portion side of the second bottom plate 41 is received and supported from below by the second arm portion 44C of the swinging arm 44, whereby the front portion side is allowed to independently swing away from the second arm portion 44C of the swinging arm 44. Also, the grass collection duct 8 includes a second manual operation mechanism 47 that enables an independent swinging operation of the second bottom plate 41.

According to this means, if clogging in which the cut grass sticks to and accumulates on the second bottom plate 41 occurs in the grass collection duct 8 during the cutting task, the driver can remove the cut grass that sticks to and accumulates on the second bottom plate 41 by independently swinging the second bottom plate 41 using the second manual operation mechanism 47.

As a result, clogging in the grass collection duct 8, which is caused by the cut grass sticking to and accumulating on the second bottom plate 41, can be easily resolved.

As shown in FIGS. 1, 2, 4, 5, and 8 to 10, the second manual operation mechanism 47 includes an approximately L-shaped second operation lever 48, an upper arm 49, a lower arm 50, a push/pull link 51, and the like. The second operation lever 48 includes a left-right oriented spindle portion 48A and is supported by the left and right second support plates 1B of the vehicle body frame 1 so as to be able to swing up and down. The upper arm 49 is fixed to the left-side portion of the spindle portion 48A. The lower arm 50 swings together with the left-side arm portions 41A of the second bottom plate 41. The push/pull link 51 connects the upper arm 49 and the lower arm 50. The second manual operation mechanism 47 swings the second bottom plate 41 from the rearward-raised guiding orientation in the rearward and downward direction due to the second operation lever 48 being operated so as to swing toward the rear of the vehicle body.

According to the above-described configuration, if clogging in which the cut grass sticks to and accumulates on the second bottom plate 41 occurs in the second duct 29 during the cutting task, the operator can, while seated in the driver's seat 16, independently swing the second bottom plate 41 in the up-down direction by swinging the second operation lever 48 in the front-rear direction, and thus it is possible to remove the cut grass that has stuck to and accumulated on the second bottom plate 41.

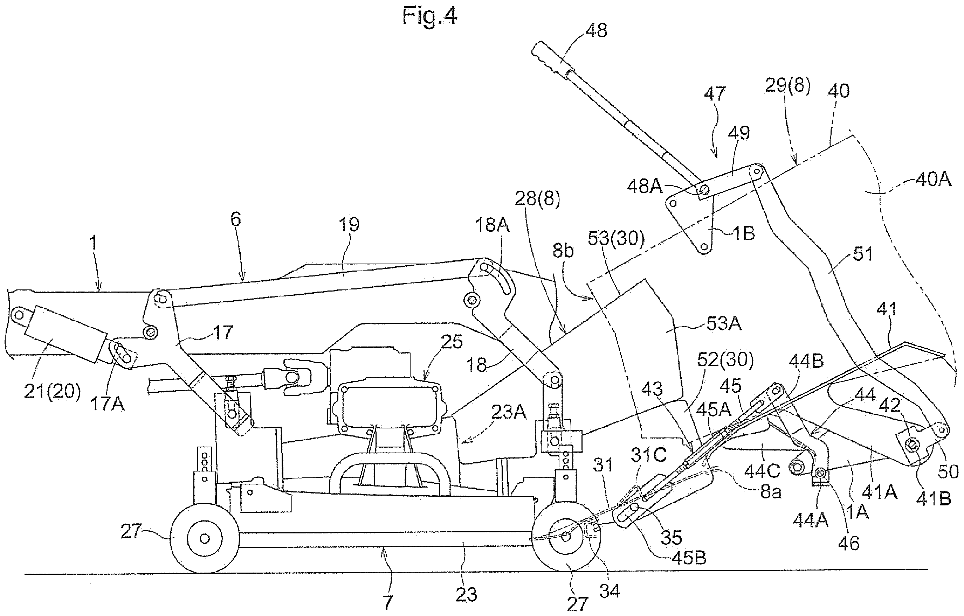

As shown in FIGS. 4, 5, 9, and 10, elongated holes 17A, 18A, and 45B are formed in the left and right front swinging arms 17 and the left and right rear swinging arms 18 of the parallel links 6, and in the push/pull rod 45 of the connection mechanism 43. The elongated holes 17A, 18A, and 45B allow upward swinging and the like of the mower unit 7.

As shown in FIGS. 3 to 9, the first bottom plate 31 has a guiding surface 31B that tilts upward toward the rear with respect to the upper surface 31A, and includes an auxiliary guiding portion 31C that guides the cut grass above the second bottom plate 41, which has swung in the forward-rising direction. Accordingly, in the case of performing a high cutting task in which the ground work height of the mower unit 7 is high, it is possible to suppress the occurrence of an inconvenience in which the cut grass guided by the first bottom plate 31 flows under the second bottom plate 41, which has been swung in the forward-rising direction accompanying the ground work height of the mower unit 7 being made higher.

The auxiliary guiding portion 31C is made of sheet metal that is bent downward, and regardless of the ground work height of the mower unit 7, the protrusion height from the upper surface 31A of the first bottom plate 31 is set such that the front end of the second bottom plate 41 is located in a region A between the upper surface 31A of the first bottom plate 31 and the protruding end of the auxiliary guiding portion 31C, rearward of the auxiliary guiding portion 31C. Accordingly, in the case of performing a high cutting task in which the ground work task height of the mower unit 7 is high, it is possible to more effectively suppress the occurrence of an inconvenience in which the cut grass guided by the first bottom plate 31 flows under the second bottom plate 41, which has been swung in the forward-rising direction accompanying the ground work height of the mower unit 7 being made higher.

As shown in FIGS. 4 to 7 and 9, the first bottom plate 31 is bent such that the rear end location thereof is tilted downward to the rear in the state in which the mower unit 7 is in contact with the ground. The front-rear length of the first bottom plate 31 is set such that in the state in which the mower unit 7 is in contact with the ground, the rear end location of the first bottom plate 31 is located on the vehicle body rear side with respect to the front end of the second bottom plate 41. Accordingly, it is possible to prevent the rear end portion of the first bottom plate 31 from getting on the front end portion of the second bottom plate 41 due to the mower unit 7 running over a foreign object during the cutting task.

As shown in FIGS. 3 to 8, the front end portion of the second duct upper body 40 is formed widely so as to cover the rear end portion of the first duct upper body 30 from above. Accordingly, it is possible to prevent the occurrence of an inconvenience in which the cut grass from the mower unit 7 leaks out from the gap 8b between the rear end portion of the first duct upper body 30 and the front end portion of the second duct upper body 40 of the grass collection duct 8.

As shown in FIGS. 4 to 8, the front end portion of the second bottom plate 41 is formed in a tapered shape such that the front end portion of the second bottom plate 41 falls within the left-right width of the first duct upper body 30. Accordingly, if the first duct upper body 30 shakes in the left-right direction due to twisting or the like of the mower unit 7, the front end portion of the second bottom plate 41 is located in the left-right width of the first duct upper body 30 so as to maintain the guiding function, while allowing shaking in the left-right direction of the first duct upper body 30. As a result, the cut grass from the mower unit 7 can be guided favorably toward the grass collection container 9 rearward of the vehicle body, regardless of the twisting of the mower unit 7 or the like that occurs during the cutting task.

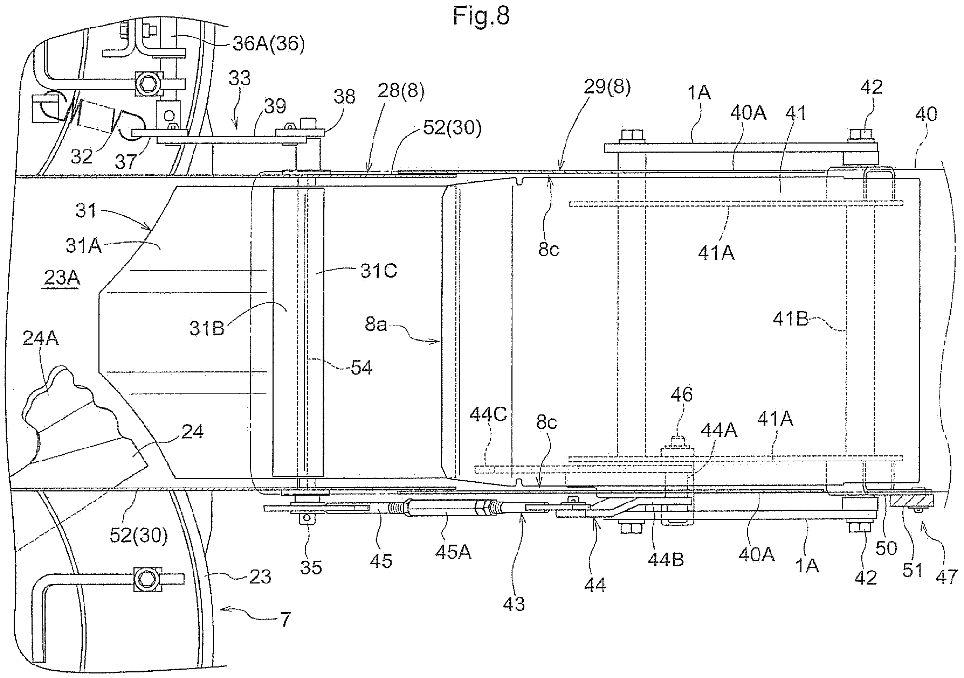

As shown in FIG. 8, chamfering is carried out on both the left and right end portions of the front end location of the second bottom plate 41 such that the front end location has a further tapered shape. Accordingly, the second bottom plate 41 is more likely to allow shaking in the left-right direction of the first duct upper body 30 caused by twisting or the like of the mower unit 7.

In the second bottom plate 41, the left-right width of the rear portion side located toward the rear of the vehicle body with respect to the rear end of the first duct upper body 30 in the uppermost raised position of the mower unit 7 is set to the maximum width at which both the left and right end portions on the rear portion side are near to the left and right-side plate portions 40A of the second duct upper body 40. Accordingly, it is possible to effectively suppress an inconvenience in which the cut grass guided by the grass collection duct 8 leaks out from the gap 8c between the second duct upper body 40 and the second bottom plate 41 in the grass collection duct 8.

As shown in FIGS. 4 to 7, 9, and 10, the second bottom plate 41 is bent such that its front portion side is tilted downward in the front with respect to the rear portion side and its front end location is further tilted downward in the front. Also, in the state in which the mower unit 7 is in contact with the ground, the front end of the second bottom plate 41 is set so as to be near to the rear end portion of the upper surface 31A of the first bottom plate 31. Accordingly, it is possible to effectively suppress the occurrence of an inconvenience in which the cut grass guided by the first bottom plate 31 flows under the second bottom plate 41.

As shown in FIGS. 3 to 8, the first duct upper body 30 includes left and right-side plates 52 that are fixed to the mower deck 23, a top plate 53 that is attached to the mower deck 23 so as to be able to swing up and down, a reinforcing plate 54 that spans between the left and right-side plates 52, a torsion spring 55 that biases the top plate 53 to swing upward, and the like. Also, the above-described swinging fulcrum axis 35 is supported by the left and right-side plates 52. The top plate 53 includes the left and right-side plate portions 53A that are adjacent to the lateral outer sides of the left and right-side plates 52. The left and right-side plate portions 53A have a vertical length that overlaps with the upper portion side of the left and right-side plates 52 in a left-right direction view in a state in which the rear end portion of the first duct upper body 30 is covered from above by the front end portion of the second duct upper body 40.

Accordingly, the first duct upper body 30 is configured such that the top plate 53 received by the second duct upper body 40 swings downward against the action of the torsion spring 55 accompanying the rising of the mower unit 7. Also, the first duct upper body 30 is configured such that the top plate 53, which attempts to separate from the second duct upper body 40, swings downward due to the action of the torsion spring 55 accompanying the lowering of the mower unit 7. Also, the first duct upper body 30 is configured such that no gap that is visible in the left-right direction is formed between the left and right-side plates 52 and the top plate 53, regardless of the swinging up and down of the top plate 53 that accompanies the rising of the mower unit 7.

Due to the first duct upper body 30 being configured in this manner, the grass collection duct 8 can prevent leaking of the cut grass from the above-described gap between the left and right-side plates 52 and the top plate 53 in the first duct upper body 30 of the first duct 28 while allowing integral raising and lowering of the mower unit 7 and the first duct 28 with respect to the second duct 29.

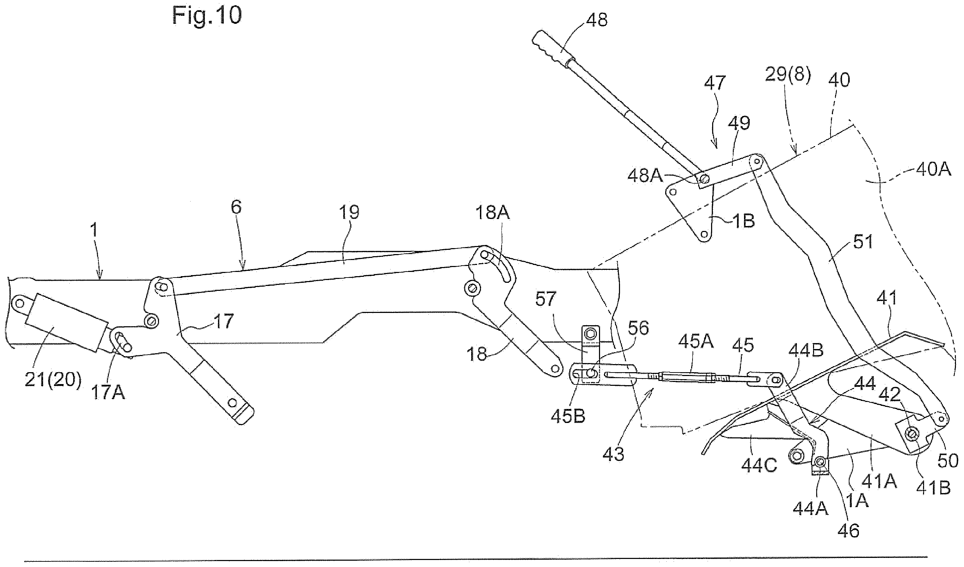

As shown in FIGS. 1 and 10, the vehicle body frame 1 includes a holder 56 that holds the front end portion of the push/pull rod 45 at a high position on the vehicle body frame side when the front end portion of the push/pull rod 45 of the connection mechanism 43 is removed from the mower unit 7. Accordingly, if the mower unit 7 is removed from the vehicle body frame 1, it is possible to cause the holder 56 to hold the push/pull rod 45 that is removed from the mower unit 7 in accordance with the removal. Also, if the grass mower from which the mower unit 7 was removed is caused to travel due to this holding, it is possible to prevent the occurrence of an inconvenience in which the front end portion of the push/pull rod 45 is dragged while in contact with the ground, and it is possible to avoid wear, deformation, and the like of the push/pull rod 45 caused by this dragging.

A headed pin that is attached to the vehicle body frame 1 via the support member 57 is used as the holder 56. The holder 56 is disposed at a position at which insertion into the elongated hole 45B of the push/pull rod 45 is possible in an orientation in which the head portion side of the headed pin protrudes leftward. Accordingly, after the front end portion of the push/pull rod 45 is removed from the mower unit 7, the head portion side of the holder (headed pin) 56 is inserted into the elongated hole 45B of the front end portion of the push/pull rod 45, and thereby the front end portion of the push/pull rod 45 is retained and held in the holder 56 due to the weight of the push/pull rod 45. That is, it is possible to stably hold the front end portion of the push/pull rod 45 in the holder 56 while simplifying the configuration of the holder 56.

## Claims

1. A grass mower comprising:
an engine (10);
a mower unit (7) that is coupled to a vehicle body frame (1) via parallel links (6) so as to be raiseable and lowerable;
a grass collection duct (8) configured to guide cut grass from the mower unit (7) toward the rear of the vehicle body; and
a grass collection container (9) configured to store the cut grass guided by the grass collection duct (8),
wherein the grass collection duct (8) includes: a first bottom plate (31) attached to the mower unit (7) side; a second bottom plate (41) attached to the vehicle body frame (1) side so as to be able to swing up and down; a first duct upper body (30) that is attached to the mower unit (7), and a second duct upper body (40) that is attached to the vehicle body frame (1) and whose front end portion is formed widely so as to cover the rear end portion of the first duct upper body (30) from above; and a connection mechanism (43) configured to swing the second bottom plate (41) up and down in conjunction with raising and lowering of the mower unit (7), and the grass mower is further configured so that
in a state in which the mower unit (7) is in contact with the ground, the connection mechanism (43) connects the mower unit (7) and the second bottom plate (41) such that the front end portion of the second bottom plate (41) is near to the rear end portion of the first bottom plate (31), and as the mower unit (7) rises rearward and upward, the second bottom plate (41) swings in a forward-rising direction and the rear end portion of the first bottom plate (31) goes below the second bottom plate (41) while the state of being near to the second bottom plate (41) is maintained; and
**characterized in that** a front end portion of the second bottom plate (41) is formed in a tapered shape that falls within the left-right width of the first duct upper body (30).

2. The grass mower according to claim 1, **characterized in that**
the connection mechanism (43) includes a push/pull rod (45) configured to convert a rising and lowering movement of the mower unit (7) into a swinging movement of the second bottom plate (41), and
the push/pull rod (45) includes an adjustment portion (45A) for adjusting a length of the push/pull rod.

3. The grass mower according to claim 1 or 2, **characterized in that**
the connection mechanism (43) includes a swinging arm (44) configured to push up the front end side of the second bottom plate (41) from below in conjunction with the raising of the mower unit (7),
the front end side of the second bottom plate (41) is allowed to independently swing away from the swinging arm (44), and
the grass collection duct (8) includes a manual operation mechanism (47) that enables an independent swinging operation of the second bottom plate (41).

4. The grass mower according to any one of claims 1 to 3, **characterized in that**
the first bottom plate (31) is attached to the mower unit (7) side so as to be able to swing up and down, and
the grass collection duct (8) includes a biasing member (32) for biasing the first bottom plate (31) to return to a rearward-raised guiding orientation, and a manual operation mechanism (33) that enables an independent swinging operation of the first bottom plate (31) against the action of the biasing member.

5. The grass mower according to any one of claims 1 to 4, **characterized in that**
the first bottom plate (31) includes a guiding surface (31B) that tilts upward to the rear with respect to the upper surface of the first bottom plate (31), and an auxiliary guiding portion (31C) that guides the cut grass above the second bottom plate (41) that has swung in a forward-rising direction.

## Patentansprüche

1. Rasenmäher, umfassend:
einen Motor (10),
eine Mäheinheit (7), die über parallele Verbindungen (6) an einen Fahrzeugkarosserierahmen (1) gekoppelt ist, um anhebbar und absenkbar zu sein,
einen Grassammelkanal (8), der dazu ausgestaltet ist, geschnittenes Gras von der Mäheinheit (7) zu der Rückseite der Fahrzeugkarosserie hin zu führen, und
einen Grassammelbehälter (9), der dazu ausgestaltet ist, das geschnittene Gras aufzunehmen, das von dem Grassammelkanal (8) geführt wird,
wobei der Grassammelkanal (8) beinhaltet: eine erste Bodenplatte (31), die an der Seite der Mäheinheit (7) angebracht ist, eine zweite Bodenplatte (41), die an der Seite des Fahrzeugkarosserierahmens (1) derart angebracht ist, dass sie auf- und abschwingen kann, einen ersten Kanaloberkörper (30), der an der Mäheinheit (7) angebracht ist, und einen zweiten Kanaloberkörper (40), der an dem Fahrzeugkarosserierahmen (1) angebracht ist und dessen vorderer Endabschnitt weit ausgebildet ist, um den hinteren Endabschnitt des ersten Kanaloberkörpers (30) von oben abzudecken, und einen Verbindungsmechanismus (43), der dazu ausgestaltet ist, die zweite Bodenplatte (41) in Verbindung mit dem Anheben und Absenken der Mäheinheit (7) auf und ab zu schwingen, und der Rasenmäher ferner dazu ausgestaltet ist, dass
in einem Zustand, in dem sich die Mäheinheit (7) in Kontakt mit dem Boden befindet, der Verbindungsmechanismus (43) die Mäheinheit (7) und die zweite Bodenplatte (41) derart verbindet, dass sich der vordere Endabschnitt der zweiten Bodenplatte (41) nahe dem hinteren Endabschnitt der ersten Bodenplatte (31) befindet, und wenn die Mäheinheit (7) nach hinten und oben ansteigt, die zweite Bodenplatte (41) in einer nach vorne ansteigenden Richtung schwingt und der hintere Endabschnitt der ersten Bodenplatte (31) unter die zweite Bodenplatte (41) reicht, während der Zustand des Nahe-der-zweiten-Bodenplatte (41)-Seins aufrechterhalten wird, und **dadurch gekennzeichnet, dass** ein vorderer Endabschnitt der zweiten Bodenplatte (41) in einer verjüngten Form ausgebildet ist, die in die Links-rechts-Breite des ersten Kanaloberkörpers (30) fällt.

2. Rasenmäher nach Anspruch 1, **dadurch gekennzeichnet, dass**
der Verbindungsmechanismus (43) eine Druck-/Zugstange (45) beinhaltet, die dazu ausgestaltet ist, eine Auf- und Abwärtsbewegung der Mäheinheit (7) in eine Schwingbewegung der zweiten Bodenplatte (41) umzuwandeln, und
die Druck-/Zugstange (45) einen Einstellabschnitt (45A) zum Einstellen einer Länge der Druck-/Zugstange beinhaltet.

3. Rasenmäher nach Anspruch 1 oder 2, **dadurch gekennzeichnet, dass**
der Verbindungsmechanismus (43) einen Schwingarm (44) beinhaltet, der dazu ausgestaltet ist, die vordere Stirnseite der zweiten Bodenplatte (41) in Verbindung mit dem Anheben der Mäheinheit (7) von unten nach oben zu drücken,
zugelassen wird, dass die vordere Stirnseite der zweiten Bodenplatte (41) unabhängig von dem Schwingarm (44) wegschwingt, und
der Grassammelkanal (8) einen Mechanismus (47) für einen manuellen Betrieb beinhaltet, der einen unabhängigen Schwingbetrieb der zweiten Bodenplatte (41) ermöglicht.

4. Rasenmäher nach einem der Ansprüche 1 bis 3, **dadurch gekennzeichnet, dass**
die erste Bodenplatte (31) an der Seite der Mäheinheit (7) derart angebracht ist, dass sie auf- und abschwingen kann, und
der Grassammelkanal (8) ein Vorspannelement (32) zum Vorspannen der ersten Bodenplatte (31), um zu einer nach hinten angehobenen Führungsausrichtung zurückzukehren, und einen Mechanismus (33) für einen manuellen Betrieb beinhaltet, der einen unabhängigen Schwingbetrieb der ersten Bodenplatte (31) gegen die Wirkung des Vorspannelements ermöglicht.

5. Rasenmäher nach einem der Ansprüche 1 bis 4, **dadurch gekennzeichnet, dass**
die erste Bodenplatte (31) eine Führungsfläche (31B), die sich in Bezug auf die Oberfläche der ersten Bodenplatte (31) nach oben nach hinten neigt, und einen Hilfsführungsabschnitt (31C) beinhaltet, der das geschnittene Gras über der zweiten Bodenplatte (41) führt, die in einer nach vorne ansteigenden Richtung geschwungen ist.

## Revendications

1. Tondeuse à gazon comprenant :
un moteur (10) ;
une unité de tondeuse (7) qui est couplée à un châssis d'une carrosserie de véhicule (1) par l'intermédiaire de liaisons parallèles (6) de façon à pouvoir être relevée et abaissée ;
une conduite de collecte de gazon (8) configurée pour guider le gazon coupé de l'unité de tondeuse (7) vers l'arrière de la carrosserie du véhicule ; et
un récipient de collecte de gazon (9) configuré pour stocker le gazon coupé guidé par la conduite de collecte de gazon (8),
dans laquelle la conduite de collecte de gazon (8) comprend : une première plaque inférieure (31), fixée au côté de l'unité de tondeuse (7); une seconde plaque inférieure (41) fixée au côté du châssis de carrosserie de véhicule (1) de façon à pouvoir osciller vers le haut et vers le bas; un premier corps supérieur de conduite (30) qui est fixé à l'unité de tondeuse (7) et un second corps supérieur de conduite (40) qui est fixé au châssis de carrosserie de véhicule (1) et dont la partie d'extrémité avant est formée de manière large de façon à recouvrir la partie d'extrémité arrière du premier corps supérieur de conduite (30) à partir du dessus ; et un mécanisme de connexion (43) configuré pour faire osciller la seconde plaque inférieure (41) vers le haut et vers le bas en conjonction au levage et à l'abaissement de l'unité de tondeuse (7) et la tondeuse à gazon est en outre configurée de telle sorte que
dans un état dans lequel l'unité de tondeuse (7) est en contact avec le sol, le mécanisme de connexion (43) connecte l'unité de tondeuse (7) et la seconde plaque inférieure (41) de telle sorte que la partie d'extrémité avant de la seconde plaque inférieure (41) est à proximité de la partie d'extrémité arrière de la première plaque inférieure (31) et au fur et à mesure que l'unité de tondeuse (7) se soulève vers l'arrière et vers le haut, la seconde plaque inférieure (41) oscille dans une direction de levage vers l'avant et la partie d'extrémité arrière de la première plaque inférieure (31) va au-dessous de la seconde plaque inférieure (41) alors que l'état de proximité à la seconde plaque inférieure (41) est maintenu ; et
**caractérisée en ce qu'**une partie d'extrémité avant de la seconde plaque inférieure (41) est formée en une forme évasée qui est reçue dans la largeur gauche-droite du corps supérieur de conduite (30).

2. Tondeuse à gazon selon la revendication 1, **caractérisée en ce que**
le mécanisme de connexion (43) comprend une tige de poussée/ traction (45) configurée pour convertir un mouvement de levage et d'abaissement de l'unité de tondeuse (7) en un mouvement d'oscillation de la seconde plaque inférieure (41), et
la tige de poussée/ traction (45) comprend une partie de réglage (45A) pour régler une longueur de la tige de poussée/ traction.

3. Tondeuse à gazon selon la revendication 1 ou 2, **caractérisée en ce que**
le mécanisme de connexion (43) comprend un bras oscillant (44) configuré pour pousser le côté d'extrémité avant de la seconde plaque inférieure (41) à partir du dessous en conjonction avec le levage de l'unité de tondeuse (7),
le côté d'extrémité avant de la seconde plaque inférieure (41) peut osciller de manière indépendante en éloignement du bras oscillant (44), et
la conduite de collecte de gazon (8) comprend un mécanisme d'opération manuelle (47) qui permet une opération d'oscillation indépendante de la seconde plaque inférieure (41).

4. Tondeuse à gazon selon l'une quelconque des revendications 1 à 3, **caractérisée en ce que**
la première plaque inférieure (31) est fixée au côté de l'unité de tondeuse (7) de façon à pouvoir osciller vers le haut et vers le bas, et
la conduite de collecte de tondeuse (8) comprend un élément de précontrainte (32) destiné à contraindre la première plaque inférieure (31) à retourner vers une orientation de guidage de levage vers l'arrière et un mécanisme d'opération manuelle (33) qui permet une opération d'oscillation indépendante de la première plaque inférieure (31) contre l'action de l'élément de précontrainte.

5. Tondeuse à gazon selon l'une quelconque des revendications 1 à 4, **caractérisée en ce que**
la première plaque inférieure (31) comprend une surface de guidage (31B) qui s'incline vers le haut vers l'arrière par rapport à la surface supérieure de la première plaque inférieure (31) et une partie de guidage auxiliaire (31C) qui guide le gazon coupé au-dessus de la seconde plaque inférieure (41) qui a oscillé suivant une direction de levage vers l'avant.
